(19) Europäisches Patentamt
European Patent Office
Office européen des brevets

(11) Veröffentlichungsnummer: **0 039 865**
**A1**

(12) **EUROPÄISCHE PATENTANMELDUNG**

(21) Anmeldenummer: 81103340.6

(22) Anmeldetag: 04.05.81

(51) Int. Cl.³: **C 08 G 18/28**
C 08 G 18/80, C 07 C 125/06
C 09 D 3/72

(30) Priorität: 13.05.80 DE 3018253

(43) Veröffentlichungstag der Anmeldung: 18.11.81 Patentblatt 81/46

(84) Benannte Vertragsstaaten: DE FR GB IT

(71) Anmelder: BAYER AG
Zentralbereich Patente, Marken und Lizenzen
D-5090 Leverkusen 1, Bayerwerk(DE)

(72) Erfinder: Wegner, Christian, Dr.
Roggendorfstrasse 65
D-5000 Köln(DE)

(72) Erfinder: Bock, Manfred, Dr.
Haydnstrasse 18
D-5090 Leverkusen(DE)

(72) Erfinder: Wagner, Kuno, Dr.
Am Kiesberg 8
D-5090 Leverkusen(DE)

(72) Erfinder: Findeisen, Kurt, Dr.
In der Follmühle 10
D-5068 Odenthal 2(DE)

(54) **Verfahren zur Herstellung von Flächengebilden.**

(57) Die Erfindung betrifft ein neues Verfahren zur Herstellung von Flächengebilden durch Beschichtung beliebiger Substrate mit einem Beschichtungsmittel, welches ein unter dem Einfluß von Hitze vernetzbares Bindemittel, einen die Vernetzungsreaktion beschleunigenden Katalysator und gegebenenfalls die in der Lacktechnologie üblichen Hilfs- und Zusatzmittel enthält, und Hitzebehandlung der erhaltenen Beschichtung, wobei man als Bindemittel Umsetzungsprodukte von organischen Polyisocyanaten von Halbacetalen des Formaldehyds gegebenenfalls zusammen mit organischen Polyhydroxylverbindungen und als Katalysator tertiäre Aminogruppen aufweisende, organische Phasen verwendet.

EP 0 039 865 A1

BAYER AKTIENGESELLSCHAFT 5090 Leverkusen, Bayerwerk

Zentralbereich
Patente, Marken und Lizenzen Wr-by-c

## Verfahren zur Herstellung von Flächengebilden

Die vorliegende Erfindung betrifft ein neues Verfahren zur Herstellung von Flächengebilden unter Verwendung von Beschichtungsmitteln, welche als Bindemittel bzw. wesentliche Bindemittelkomponente Umsetzungsprodukte von organischen Polyisocyanaten mit Halbacetalen des Formaldehyds in Kombination mit organischen Basen enthalten.

Im Rahmen der vorliegenden Erfindung umfaßt der Begriff "Halbacetale des Formaldehyds" alle Verbindungen bzw. Gemische von Verbindungen der Formel

$$HO{+}(CH_2-O)_n-R$$

mit der nachstehend genannten Bedeutung für R und n, d.h. nicht nur die echten Halbacetale (n = 1) sondern auch die entsprechenden Polymethylenglykoletheracetale (n > 1).

Die Umsetzung von Halbacetalen des Formaldehyds mit

Mono- und Polyisocyanaten ist bereits in der DE-AS 1 092 002 beschrieben. Die in guten Ausbeuten ablaufende Reaktion führt zu Struktureinheiten der Formel

$$-NH-CO-O-(CH_2-O)_n-R$$

aufweisenden Verbindungen mit der nachstehend genannten Bedeutung für R und n.

Gemäß der Lehre der DE-AS 1 092 002 lassen sich die Additionsprodukte von Halbacetalen an Isocyanate selbst im Hochvakuum nicht destillieren, da sie ab 120°C vorzugsweise in Alkohol, Aldehyd und $CO_2$ zerfallen. Dieser Zerfall wird auch beobachtet, wenn man die in der DE-AS 1 092 002 nicht erwähnten Additionsprodukte von Halbacetalen an Polyisocyanate mit 3 und mehr NCO-Gruppen, wie z.B. biuretisiertes Hexamethylendiisocyanat, erhitzt.

In der DE-AS 1 092 002 findet sich zwar auch ein Hinweis, daß bei Verwendung aromatischer Diisocyanate als Ausgangsmaterial bei der Hitzebehandlung der Umsetzungsprodukte hochmolekulare Kondensationsprodukte entstehen. Die dort angedeutete Herstellung hochmolekularer Verbindungen durch Hitzebehandlung der genannten Additionsverbindungen konnte bislang jedoch noch nicht technisch genutzt werden. Es ist, wie neuere Versuche gezeigt haben, in der Tat auch nicht möglich, durch Hitzebehandlung der genannten Additionsverbindungen technisch brauchbare hochmolekulare Substanzen herzustellen. Viel mehr tritt in den meisten Fällen, die bereits angedeutete Zersetzung der Additionsverbindungen in niedermolekulare Spaltprodukte ein.

Um so überraschender war daher die Feststellung, daß es bei Einsatz katalytischer Mengen von tert. Aminogruppen enthaltenden Verbindungen gelingt, die Zerfallsreaktion zu unterbinden und eine Vernetzungsreaktion einzuleiten, die die Herstellung von Flächengebilden einer ausgezeichneten mechanischen Beschaffenheit gestattet. Dieser Befund kann als überraschend bezeichnet werden, da bekannt ist, daß sich mit den hier diskutierten Additionsverbindungen strukturell verwandte Verbindungen, wie z.B. Methoxymethylolamide und Methoxymethylolmelamine nur unter sauren Bedingungen vernetzen lassen. Bei Erhitzen der hier diskutierten Additionsverbindungen mit Säuren zersetzen sich diese jedoch ebenfalls in der oben beschriebenen Weise.

Gegenstand der vorliegenden Erfindung ist ein Verfahren zur Herstellung von Flächengebilden durch Beschichtung beliebiger Substrate mit einem Beschichtungsmittel, welches

a) ein unter dem Einfluß von Hitze vernetzbares Bindemittel,

b) einen die Vernetzungsreaktion beschleunigenden Katalysator, und gegebenenfalls

c) die in der Lacktechnologie üblichen Hilfs- und Zusatzmittel

enthält, und Hitzebehandlung der erhaltenen Beschichtung, dadurch gekennzeichnet, daß man

a) als Bindemittel Verbindungen der Formel

$$Q[-NH-CO-O(CH_2-O)_nR]_m$$

in welcher

Q für einen Rest steht, wie er durch Entfernung der Isocyanatgruppen aus einem m-wertigen organischen Polyisocyanat erhalten wird,

R für einen Rest steht, wie er durch Entfernung der Hydroxylgruppe aus einem einwertigen aliphatischen, araliphatischen oder cycloaliphatischen Alkohol erhalten wird,

m für eine ganze oder (im statistischen Mittel) gebrochene Zahl von 2 bis 4 steht und

n für eine ganze oder (im statistischen Mittel) gebrochene Zahl von 1 bis 4 steht,

gegebenenfalls zusammen mit organischen Polyhydroxylverbindungen mit alkoholisch gebundenen Hydroxylgruppen und einem Molekulargewicht zwischen 62 und 10.000 und

b) als Katalysator tertiäre Aminogruppen aufweisende, organische Basen

verwendet.

Die Herstellung der der zuletzt genannten Formel entsprechenden Verbindungen, die den wesentlichen Bestandteil der Komponente a) bilden, erfolgt durch Umsetzung von

aa) organischen Polyisocyanaten der Formel

$$Q(NCO)_m$$

in welcher

Q und m die obengenannte Bedeutung haben mit

ab) Halbacetalen des Formaldehyds der Formel

$$HO{-}(CH_2{-}O)_n{-}R$$

in welcher

R und n ebenfalls die genannte Bedeutung haben,

wobei jedoch R vorzugsweise für einen gesättigten aliphatischen Kohlenwasserstoffrest mit 1 bis 5 Kohlenstoffatomen steht.

Geeignete Polyisocyanate aa) sind beispielsweise solche der genannten Formel, für welche

Q einen aliphatischen Kohlenwasserstoffrest mit 2 bis 18, insbesondere 6 bis 10 Kohlenstoffatomen, einen cycloaliphatischen Kohlenwasserstoffrest mit 4 bis 15, insbesondere 5 bis 10 Kohlenstoffatomen, einen aromatischen Kohlenwasserstoffrest mit 6 bis 15, insbesondere 6 bis 13 Kohlenstoffatomen oder einen araliphatischen Kohlenwasserstoffrest mit 8 bis 15, insbesondere 8 bis 13 Kohlenstoffatomen bedeutet oder für einen Rest steht, wie er durch Entfernung der Isocyanatgruppen aus einem m-wertigen modifizierten, d.h. Urethan-, Biuret-, Isocyanurat-Carbodiimid-, Uretdion-,Uretonimon-, Allophanat- oder Harnstoffgruppen aufweisenden m-wertigen Polyisocyanat erhalten wird, wobei die genannten modifizierten Polyisocyanate ihrerseits durch die an sich bekannten entsprechenden Modifizierungsreaktionen der einfachen nicht-modifizierten Polyisocyanate zugänglich sind und für welche

m für eine ganze Zahl von 2 bis 4 bzw. im Falle der ebenfalls möglichen Verwendung von Polyisocyanatgemischen im statistischen Mittel für eine ganze oder gebrochene Zahl von 2 bis 4 steht.

Typische Beispiele geeigneter Polyisocyanate aa) sind Ethylendiisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonylisocyanate gemäß der US-Patentschrift 3 454 606, Carbodiimidgruppen aufweisende Polyisocyanate, wie sie in der DE-PS 1 092 007 (US-Patentschrift 3 152 162) sowie in den DE-Offenlegungsschriften 2 504 400, 2 537 685 und 2 552 350 beschrieben werden, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-PS 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der DE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden oder Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden.

Besonders bevorzugt werden in der Regel die technisch leicht zugänglichen Polyisocyanate eingesetzt, wie z.B. das Hexamethylendiisocyanat, das Isophorondiisocyanat, das 4,4'-Diisocyanatodicyclohexylmethan, das 2,4- und 2,6-Toluylendiisocyanat und Polyphenyl-polymethylen-polyisocyanate, wie sie durch Anilin-Formaldehydkondensation und anschließende Phosgenierung hergestellt werden, sowie die aus diesen hergestellten Carbodiimidgruppen, Uretdiongruppen, Uretonimingruppen, Urethangruppen, Allophanatgruppen, Isocyanuratgruppen, Harnstoffgruppen oder Biuretgruppen aufweisende Polyisocyanate (modifizierte Polyisocyanate).

Die Halbacetale des Formaldehyds ab) stellen seit langen Jahren bekannte Verbindungen dar und können

beispielsweise wie in DE-AS 1 092 002 beschrieben aus Formaldehyd bzw. Paraformaldehyd und beliebigen einwertigen Alkoholen hergestellt werden. Bevorzugt sind solche Verbindungen ab), bei deren Herstellung pro Mol an einwertigem Alkohol 1 bis 3, insbesondere 1 bis 1,5 Mol Formaldehyd bzw. eine entsprechende Menge an Paraformaldehyd eingesetzt worden ist. Es ist jedoch auch möglich bei der Herstellung der Halbacetale des Formaldehyds einen größeren Überschuß an Aldehyd einzusetzen, so daß Halbacetale des Formaldehyds bzw. Gemische von Halbacetalen des Formaldehyds der obengenannten allgemeinen Formel erhalten werden, für welche n für eine ganze oder (im statistischen Mittel) gebrochene Zahl von 1 bis 4, vorzugsweise 1 bis 3 und insbesondere 1 bis 1,5 steht. Bevorzugt zur Herstellung der Halbacetale des Formaldehyds ab) einzusetzende einwertige Alkohole sind beliebige gesättigte aliphatische Alkohole mit 1 bis 5 Kohlenstoffatomen wie z.B. Methanol, Ethanol, Isopropanol, n-Butanol, Isobutanol, tert.-Butanol oder n-Amylalkohol.

Gemäß einer besonderen Ausführungsform des erfindungsgemäßen Verfahrens werden solche Halbacetale des Formaldehyds verwendet, bei deren Herstellung als Alkohol tert. Aminogruppen aufweisende Alkohole wie z.B. N,N-Dimethylethanolamin eingesetzt wurden, so daß R in den obengenannten allgemeinen Formeln für einen tert. Aminogruppen aufweisenden einwertigen Kohlenwasserstoffrest steht. Im Falle der Verwendung derartiger Halbacetale des Formaldehyds zur Herstellung der erfindungswesentlichen Bindemittelkomponente erübrigt sich die separate Mitverwendung eines basischen Katalysators b), da dieser Katalysator bereits im Bindemittel a) in chemisch gebundener Form vorliegt. Die Herstellung der wesentlichen Bindemittelkomponente a) der Formel

$$Q[-NH-CO-O-(CH_2-O)_n-R]_m$$

erfolgt durch Umsetzung der Polyisocyanate aa) mit den Halbacetalen des Formaldehyds ab) in Anlehnung an DE-AS 1 092 002 vorzugsweise bei Temperaturen unterhalb 40°C, insbesondere bei 15 bis 30°C in An- oder Abwesenheit von Lösungsmitteln wie beispielsweise Toluol, Essigsäureethylester, Ethylenglykol-monoethylether-acetat und/oder Xylol. Bei dieser Umsetzung werden im allgemeinen pro Mol der Polyisocyanatkomponente aa) 0,5 m bis 2 m, vorzugsweise 0,8 m bis 1,2 m Mol Halbacetal ab) eingesetzt. Im Falle der Verwendung eines Unterschusses an Halbacetal entstehen noch freie NCO-Gruppen aufweisende Umsetzungsprodukte, die beispielsweise vor ihrer Verwendung beim erfindungsgemäßen Verfahren durch Umsetzung mit Polyhydroxylverbindungen der nachstehend beispielhaft genannten Art in Präpolymere überführt werden können, die ebenfalls der allgemeinen Formel für die erfindungswesentlichen Bindemittel entsprechen und für welche Q für einen Rest steht, wie er durch Entfernung der Isocyanatgruppen aus einem m-wertigen Urethangruppen aufweisenden Polyisocyanat erhalten wird. Beim Arbeiten innerhalb des genannten Vorzugsbereichs erübrigt sich auch bei Verwendung eines NCO-Überschusses eine Nachbehandlung

des Umsetzungsproduktes, da oft im Halbacetal vorliegende Wasserspuren mit dem NCO-Überschuß abreagieren. Die Umsetzung kann durch Basen, insbesondere tertiäre Amine beispielsweise der nachstehend genannten Art, katalytisch beschleunigt werden, so daß es oft zweckmäßig ist, bereits bei der Herstellung der Additionsverbindungen die erfindungswesentliche Katalysatorenkomponente b) einzusetzen. Als Katalysatoren b) kommen beliebige organische Verbindungen, die mindestens eine tertiäre Aminogruppe aufweisen in Betracht. Vorzugsweise werden tertiäre Amine mit nicht-aromatisch gebundenen tertiären Aminogruppen verwendet, insbesondere solche, die bei der Hitzebehandlung der Beschichtungen nicht aus dem Film abdampfen, d.h. die unter den erfindungsgemäßen Einbrennbedingungen nicht flüchtig sind. Geeignete Katalysatoren sind beispielsweise in den Deutschen Offenlegungsschriften 2 732 292, 2 624 527 und 2 636 787 beschrieben. Im einzelnen genannt seien z.B. Bis-(3-dimethylaminopropylformamid und Heptamethyltetraethylenpentamin. Ebenfalls als Katalysator geeignet sind Amidinstrukturen enthaltende Verbindungen, wie z.B. das 1,5-Diazabicyclo(4.3.0)-non-5-en oder das 1,8-Diazabicyclo-(5.4.0)-undec-7-en. Beispielsweise für geeignete Katalysatoren sind auch die Umsetzungsprodukte von Ammoniak, primären oder sekundären Aminen mit Epoxiden, wie z.B. Triethanol- oder N,N-Dimethylethanolamin, sowie deren durch weitere Addition von Epoxiden erhältlichen höheren Homologen.

Sehr gut geeignet sind auch nicht-flüchtige tertiäre Amine, die durch Modifizierung von einfachen tertiären Aminen mit aktiven Wasserstoffatomen wie z.B. von

N,N-Dimethyl-ethanolamin, N,N-Diethyl-ethanolamin, 1-Amino-3-dimethylamino-propan oder Bis-(3-dimethylaminopropyl)-amin mit beliebigen aliphatischen oder aromatischen Mono- oder Polyisocyanaten oder mit Acylierungsmitteln hergestellt worden sind. Zur Modifizierung der genannten, aktiven Wasserstoff aufweisenden Polyamine sind beispielsweise Hexamethylendiisocyanat, Isophorondiisocyanat, n-Butylisocyanat, Cyclohexylisocyanat, Phenylisocyanat, 2,4-Toluylendiisocyanat oder 4,4'-Diisocyanatodiphenylmethan geeignet. Andere geeignete Acylierungsmittel sind beispielsweise Carbonsäurechloride wie z.B. Benzoylchlorid, Ketene oder Diketene, wobei jedoch im Falle der Abspaltung von Säuren bei der Acylierungsreaktion dafür Sorge getragen werden muß, daß in den Modifizierungsprodukten noch freie basische Aminogruppen vorliegen. Auch die Überführung der beispielhaft genannten tertiären Amine mit aktiven Wasserstoffatomen in ester- und amidartige Derivate beispielsweise durch deren Umsetzung mit organischen Sulfonsäuren oder Phosphorsäure können erfindungsgemäß gut geeignete schwerflüchtige tertiäre Amine erhalten werden.

Bei der Durchführung des erfindungsgemäßen Verfahrens werden die Katalysatoren b) im allgemeinen in Mengen von 0,01 bis 10 Gew.-%, vorzugsweise 0,1 bis 3 Gew.-%, jeweils bezogen auf die Menge der Komponente a), eingesetzt. Auch Cokatalysatoren wie z.B. die in der Polyurethanchemie als Katalysatoren bekannten Zinnorganischen Verbindungen wie z.B. Zinn-(II)-octoat oder Dibutylzinndilaurat können mitverwendet werden.

Bei der Durchführung des erfindungsgemäßen Verfahrens kommen die aus den Komponenten aa) und ab) gebildeten



BAD ORIGINAL

Addukte der obengenannten allgemeinen Formel entweder als alleinige Bindemittelkomponente oder in Kombination mit organischen Polyhydroxylverbindungen des Molekulargewichtsbereichs 62-10.000, vorzugsweise 600 bis 4.000 zum Einsatz. Beispiele derartiger Verbindungen sind niedermolekulare Polyole wie Ethylenglykol, 1,2-Propandiol, 1,4-Butandiol, Hexamethylenglykol, Octamethylenglykol, Neopentylglykol, Glycerin, Trimethylolpropan, Triethylenglykol, Tetraethylenglykol, Dipropylenglykol, Tetrapropylenglykol, 4,4'-Dihydroxydiphenylpropan oder auch höhermolekulare, in der Polyurethanchemie an sich bekannte im allgemeinen 2 bis 8, vorzugsweise 2 bis 4 Hydroxylgruppen aufweisende Polyester-, Polyether-, Polyacrylat- oder Polycarbonat-Polyole, die im allgemeinen ein Molekulargewicht zwischen 400 und 10.000 vorzugsweise 600 und 4.000 aufweisen. Selbstverständlich können auch beliebige Gemische derartiger Polyhydroxylverbindungen mitverwendet werden. Diese Hydroxylgruppen aufweisenden Verbindungen werden maximal in solchen Mengen eingesetzt, daß auf jede Struktureinheit der Formel

$$-NH-CO-O-(CH_2-O)_nR$$

eine Hydroxylgruppe entfällt. Im allgemeinen entspricht die Menge der Polyhydroxylkomponente einem Äquivalentverhältnis von Hydroxylgruppen zu Gruppen der letztgenannten Struktur von 0,01:1 bis 0,6:1. Durch Art und Auswahl der gegebenenfalls mitzuverwendenden Polyhydroxylverbindungen können die Eigenschaften der letztlich erhaltenen Flächengebilde dem jeweils gewünschten Verwendungszweck optimal angepaßt werden. Grundsätzlich ist die Mitverwendung derartiger Polyhydroxylverbindungen jedoch nicht erforderlich. Auch bei einem Verzicht auf eine Mitverwendung derartiger

Polyhydroxylverbindungen können die Eigenschaften der letztlich erhaltenen Flächengebilde beispielsweise durch Wahl des Polyisocyanats aa) variiert werden. So können beispielsweise elastifizierende struktureinheiten nicht nur durch die Mitverwendung höhermolekularer Polyhydroxylverbindungen sondern auch beispielsweise durch die Verwendung eines entsprechenden NCO-Präpolymeren als Polyisocyanatkomponente aa) in die erfindungsgemäßen Flächengebilde eingebaut werden.

Die beim erfindungsgemäßen Verfahren einzusetzenden Beschichtungsmittel können neben den erfindungswesentlichen Komponenten a) und b) selbstverständlich alle in der Lacktechnologie üblichen Hilfs- und Zusatzmittel enthalten. Hierzu gehören beispielsweise die in der Lacktechnologie üblichen Lösungsmittel wie z.B. Ethylacetat, Butylacetat, Methylisobutylketon, Methylethylketon, Ethylenglykol-monoethylether-acetat, Xylol, Toluol, Testbenzin, sowie beliebige Gemische derartiger Lösungsmittel. Weitere gegebenenfalls mögliche Zusatzmittel sind die üblichen Pigmente, Verlaufshilfsmittel oder Füllstoffe.

Zur Durchführung des erfindungsgemäßen Verfahrens werden die Beschichtungsmittel nach beliebigen Methoden der Lacktechnologie wie Spritzen, Streichen, Spachteln oder Tauchen auf beliebige Substrate wie Glas oder Metall aufgebracht und anschließend bei 80 bis 250°C, vorzugsweise 100 bis 150°C, eingebrannt.

Die nachfolgenden Beispiele dienen zur näheren Erläuterung der Erfindung, ohne diese zu beschränken. Alle Prozentangaben beziehen sich auf Gewichtsprozente.

Beispiel 1

A. Herstellung des Halbacetaladduktes

Zu 500 g eines biuretisierten Hexamethylendiisocyanats (NCO = 23,8 %) tropft man bei Raumtemperatur innerhalb von zwei Stunden 176 g eines Halbacetals, welches aus Paraformaldehyd und Methanol im Molverhältnis 1:1 hergestellt wurde (NCO:OH = 1:1). Man rührt 8 Stunden bei Raumtemperatur nach, verdünnt mit 225 g Ethylenglykol-monoethylether-acetat und erhitzt im Wasserstrahlvakuum auf 50°C, um das in geringer Menge entstandene Kohlendioxid auszutreiben. Man erhält ein klares, hellgelbes, lagerstabiles Öl.

B. Herstellung von Lackfilmen

Das gemäß A hergestellte Produkt wird mit 2 % (bez. auf Feststoffgehalt) Bis-(3-dimethylaminopropyl)-formamid vermischt, durch Streichen auf ein Blech in dünner Schicht aufgetragen und 30 min bei 130°C eingebrannt. Man erhält einen klaren, glänzenden, lösungsmittelbeständigen elastischen Film. Wird das Produkt ohne den basischen Katalysator unter denselben Bedingungen eingebrannt, so erhält man nur einen teilvernetzten nicht lösungsmittelbeständigen Film.

Beispiel 2

A. Herstellung des Halbacetaladduktes

Man verfährt wie in Beispiel 1 A angegeben, setzt jedoch 201,5 g eines Halbacetals ein, welches aus Paraformaldehyd und Methanol im Molverhältnis 1,33 zu 1 hergestellt wurde (NCO:OH = 1:1).

B. Herstellung eines Lackfilmes

10 g des gemäß 2 A hergestellten Produktes werden mit 8 g einer 65 %igen Lösung in Ethylenglykol-monomethylether-acetat eines nach an sich bekannten Verfahren aus Phthalsäure, Hexahydrophthalsäure, Maleinsäureanhydrid und Trimethylolpropan hergestellten Polyesters (OH-Zahl 250-270, Säurezahl $< 3$, Schmp. 90-100°C) und 2 g eines Katalysators, der aus 1 Mol Hexamethylendiisocyanat und 2 Molen Bis-(3-dimethylaminopropyl)-amin hergestellt wurde, vermischt. Nach Auftragen durch Streichen auf ein Blech und Einbrennen bei 130°C/30 min erhält man einen hochglänzenden, harten lösungsmittelfesten und elastischen Film.

Beispiel 3

A. Herstellung des Halbacetaladduktes

Zu 450 g eines durch Trimerisierung von Hexamethylendiisocyanat gewonnen Isocyanuratgruppen aufweisenden Polyisocyanat mit einem NCO-Gehalt von 21,8 Gew.-%, welches mit 50 g Ethylenglykol-monoethylether-acetat verdünnt wurde, tropft man innerhalb von 2 Stunden 139 g (NCO:OH = 1:0,83) des in Beispiel 2 A beschriebenen Halbacetals. Man rührt 8 Stunden bei Raumtemperatur nach, treibt Kohlendioxid aus, verdünnt mit 213 g Ethylenglykol-monoethylether-acetat und erhält schließlich ein helles, klares, mittelviskoses Öl.

B. Herstellung eines Lackfilmes

10 g des gemäß A hergestellten Produktes versetzt man mit 0,4 g des in Beispiel 2 B beschriebenen Katalysators und bringt es durch Streichen als dünnen Film auf ein Blech auf. Man brennt 1 Minute bei 300°C ein und erhält schließlich einen lösungsmittelfesten, elastischen Film.

Beispiel 4

A. Herstellung des Halbacetaladduktes

400 g eines NCO-Präpolymeren mit einem NCO-Gehalt von 11,9 Gew.-%, hergestellt durch Umsetzung von 211 Gew.-Teilen 2,4-Diisocyanatotoluol mit einem Gemisch aus 148 Gew.-Teilen Polypropylenglykol (OH-Zahl = 112) und 41 g Trimethylolpropan werden mit 200 g Ethylenglykol-monoethylether-acetat verdünnt

und bei 15°C innerhalb von 2 Stunden mit 81,4 g des in Beispiel 2 beschriebenen Halbacetal umgesetzt (NCO:OH = 1:1). Man rührt 2 Stunden bei 15°C und dann 6 Stunden bei 25°C nach. Es wird ein gelbliches, klares, mittelviskoses Öl erhalten.

B. Herstellung eines Lackfilmes

10 g des gemäß A hergestellten Produktes werden mit 0,5 g des in Beispiel 2 B beschriebenen Katalysators versetzt, durch Streichen auf ein Blech aufgebracht und 30 Minuten bei 160°C eingebrannt. Man erhält einen klaren, lösungsmittelbeständigen Film. Ein Lackfilm mit ebenso guten Eigenschaften wird auch beispielsweise dann erhalten, wenn man dem Ansatz 5 g des in Beispiel 2 B beschriebenen Polyesters zusetzt und 30 Minuten bei 110°C einbrennt. Wird auf Zusatz des Katalysators verzichtet, so erhält man nur einen teilvernetzten und nicht lösungsmittelbeständigen Lackfilm.

Patentansprüche

1. Verfahren zur Herstellung von Flächengebilden durch Beschichtung beliebiger Substrate mit einem Beschichtungsmittel, welches

a) ein unter dem Einfluß von Hitze vernetzbares Bindemittel,

b) einen die Vernetzungsreaktion beschleunigenden Katalysator, und gegebenenfalls

c) die in der Lacktechnologie üblichen Hilfs- und Zusatzmittel

enthält, und Hitzebehandlung der erhaltenen Beschichtung, dadurch gekennzeichnet, daß man

a) als Bindemittel Verbindungen der Formel

$$Q[-NH-CO-O-(CH_2-O)_n-R]_m$$

in welcher

Q für einen Rest steht, wie er durch Entfernung der Isocyanatgruppen aus einem m-wertigen organischen Polyisocyanat erhalten wird,

R für einen Rest steht, wie er durch Entfernung der Hydroxylgruppe aus einem einwertigen aliphatischen, araliphatischen oder cycloaliphatischen Alkohol erhalten wird,

m für eine ganze oder (im statistischen Mittel) gebrochene Zahl von 2 bis 4 steht und

n für eine ganze oder (im statistischen Mittel) gebrochene Zahl von 1 bis 4 steht,

gegebenenfalls zusammen mit organischen Polyhydroxylverbindungen mit alkoholisch gebundenen Hydroxylgruppen und einem Molekulargewicht zwischen 62 und 10.000 und

b) als Katalysator tertiäre Aminogruppen aufweisende, organische Basen

verwendet.

2. Verfahren gemäß Anspruch 1, dadurch gekennzeichnet, daß man als Komponente a) solche Verbindungen der in Anspruch 1 genannten Formel gegebenenfalls in Kombination mit den in Anspruch 1 genannten Polyhydroxylverbindungen verwendet, für welche Q, m und n die in Anspruch 1 genannte Bedeutung haben und R für einen einwertigen aliphatischen Kohlenwasserstoffrest mit 1 bis 5 Kohlenstoffatomen steht.

**0039865**
Nummer der Anmeldung

Europäisches Patentamt

# EUROPÄISCHER RECHERCHENBERICHT

EP 81 10 3340

| EINSCHLÄGIGE DOKUMENTE | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| | FR - A - 1 436 251 (ROHM & HAAS)<br>* Seiten 5,6; Zusammenfassung, Punkte $I_1$,$I_2$,$II_1$; Seite 2, rechte Spalte, letzter Absatz - Seite 3, rechte Spalte, Absatz 2; Seiten 3,4; Beispiele 1,2 *<br>-- | 1,2 | C 08 G 18/28<br>18/80<br>C 07 C 125/06<br>C 09 D 3/72 |
| D | DE - B - 1 092 002 (BAYER)<br>* Spalten 8-10; Ansprüche 1,2; Spalten 7,8; Beispiel 9 *<br>---- | 1,2 | |

**RECHERCHIERTE SACHGEBIETE (Int Cl ³)**

C 08 G 18/56
18/28
18/30
18/80
C 07 C 125/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 24-08-1981 | V. PUYMBROECK |